(19) Europäisches Patentamt
European Patent Office
Office européen des brevets

(11) Publication number : **0 427 191 B1**

(12) # EUROPEAN PATENT SPECIFICATION

(45) Date of publication of patent specification : **24.11.93 Bulletin 93/47**

(51) Int. Cl.$^5$ : **C02F 1/20,** C02F 1/32

(21) Application number : **90121193.8**

(22) Date of filing : **06.11.90**

(54) **Process for removing dissolved oxygen from water and system therefor.**

(30) Priority : **07.11.89 JP 287860/89**
**15.03.90 JP 62496/90**
**15.03.90 JP 62497/90**
**12.10.90 JP 274766/90**

(43) Date of publication of application : **15.05.91 Bulletin 91/20**

(45) Publication of the grant of the patent : **24.11.93 Bulletin 93/47**

(84) Designated Contracting States : **DE FR GB IT**

(56) References cited :
**EP-A- 0 140 563**
**EP-A- 0 281 940**
**WO-A-87/00517**
**FR-A- 2 418 007**
**US-A- 4 527 626**

(73) Proprietor : **EBARA CORPORATION**
**11-1, Haneda Asahi-cho**
**Ohta-ku Tokyo (JP)**
Proprietor : **EBARA RESEARCH CO., LTD.**
**4-2-1, Honfujisawa**
**Fujisawa-shi Kanagawa-ken (JP)**

(72) Inventor : **Saito, Takayuki**
**2-24-108 Higashiyawata 4-chome**
**Hiratsuka-shi Kanagawa-ken (JP)**
Inventor : **Arimitsu. Hidenobu**
**539-9 Aina Atsugi-shi**
**Kanagawa-ken (JP)**
Inventor : **Nakajima, Ken**
**1761 Dai Kamakura-shi**
**Kanagawa-ken (JP)**
Inventor : **Iwase, Yoko**
**2-10-18 Kugenumafujigaya**
**Fujisawa-shi Kanagawa-ken (JP)**
Inventor : **Shima, Hiroyuki**
**Ebara Fujisawaryo, 1-9-2, Inari**
**Fujisawa-shi Kanagawa-ken (JP)**

(74) Representative : **Nöth, Heinz, Dipl.-Phys. et al**
**Patentanwalt, Mozartstrasse 17**
**D-80336 München (DE)**

**EP 0 427 191 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a process for removing dissolved oxygen (hereinafter referred to as DO) from water and particularly to a process for removing DO present in a low concentration (1 mg/ℓ or less) from water and a system therefor.

The preent invention can be utilized for rinsing water used in the electronics industry, feedwater for boilers, water used in various steps of the food industry, cleaning water, etc.

In a known process (EP-A- 140 563) for removing DO from an aqeous medium used in a steam generation system, hydrazine is added to the aqueous medium, after passage through the steam generator and prior to passage thereof through a condenser and passes to a condenser hotwell to provide a contact between the hydrazine and the DO in the aqueous medium condensate. The hydrazine-containing condensate is exposed to ultraviolet irradiation for a period of time sufficient to effect removal of the DO by the hydrazine, and the resulting aqueous condensate is recycled for use in the steam generator.

In another known process (EP-A- 281 940) for removing DO from water, hydrogen is added after an ultraviolet irradiation of the water has been conducted for the removal of organic substances and/or micro-organisms. In the reaction vessel into which the irradiated water and the hydrogen pass, remaining $O_2$ and $O_3$ are broken down under the additional action of a catalyst, for example palladium.

The conventional processes for removing DO from water include physical processes (e.g., thermal degassing, vacuum degassing, purging with $N_2$ gas) and chemical processes involving the addition of a reducing agent.

The process of thermal degassing comprises contacting a gas-containing water directly with steam to heat the water and thereby reducing the water solubility of the gas to remove DO from the water. This process is employed mainly at power plants requiring a large amount of water, in order to remove DO from feedwater for boilers to prevent the corrosion of boilers, etc.

The process by vacuum degassing is used mainly for degassing of cooling water. The vacuum degassing tower used in the process is packed with Raschig rings, etc.; in this tower, water is sprayed at the top to increase the surface area of the water present in the tower and further a vacuum is created inside the tower, whereby the gas dissolved in water is discharged out of the tower. A membrane degassing process which effects vacuum degassing via a hydrophobic membrane has recently attracted attention. In this process, since the liquid phase and the gas phase (vacuum) are separated by the membrane. The tower height is not subject to any restriction. unlike in the case of the vacuum degassing tower.

There is also a process comprising blowing $N_2$ gas into water to increase the partial pressure of $N_2$ gas in the water and thereby decrease the partial pressure of $O_2$ gas in the water, to remove $O_2$ gas from the water.

The above are physical processes for removing DO from water. Besides these, there are chemical processes utilizing a chemical reaction. For example, a reducing agent such as hydrazine ($N_2H_4$), sodium sulfite ($Na_2SO_3$) or the like is added to water to effect the following chemical reaction, whereby the DO in the water can be removed.

$$N_2H_4 + O_2 \rightarrow N_2 + 2H_2O$$

$$2Na_2SO_3 + O_2 \rightarrow 2Na_2SO_4$$

In recent years, with the adoption of a higher density in semiconductor integrated circuits, the quality requirements for the ultrapure water used therefor have become increasingly higher. For example, as shown in Table 1, such water is required to contain electrolytes, fine particles, living microbes, etc. in extremely low concentrations, and DO in a concentration of 50 μg/ℓ or less.

Table 1

Quality of Ultrapure Water and Integration of LSI Circuit

| Item | Integration | | |
|---|---|---|---|
| | 1 M | 4 M | 16 M |
| Resistivity (MΩ-cm at 25 °C) | >17.5 | >18.0 | >18.0 |
| Fine particles (counts/mℓ) | | | |
| 0.1 μm | <20 | | |
| 0.08 μm | | <10 | |
| 0.05 μm | | | <10 |
| Living microbes (counts/100 mℓ) | <10 | <5 | <1 |
| TOC (μg C/ℓ) | <50 | <30 | <10 |
| Silica (μg $SiO_2$/ℓ) | <10 | <3 | <1 |
| DO (μg O/ℓ) | <100 | <50 | <50 |

Achieving an extremely low concentration of DO with the conventional thermal degassing or vacuum degassing process alone is difficult not only from the principle of the process but also in view of the facility scale or treatment time required for the process. Therefore, in the case of, for example. feedwater for percolation type boilers, etc., a chemical process of injecting hydrazine ($N_2H_4$) is used in combination with the above physical process, in order to reduce the DO in the feedwater to 100 μg/ℓ or less.

In removing DO by a chemical process, however, there remains the chemical reagent (e.g., $N_2H_4$, $Na_2SO_3$) added in excess relative to the amount of DO; the residual chemical reagent becomes a load to an ion exchange resin used in the ion exchange treatment, and moreover the $SO_4^{2-}$ ion, etc. formed by the reaction of the chemical reagent with DO becomes a load to the ion exchange resin as well.

Further, the purging process by $N_2$ requires the use of a large amount of $N_2$ gas (1-2 $Nm^3/m^3$), which is uneconomical.

As described above, in-achieving an extremely low concentration of DO by conventional degassing processes, there have been problems; for example, a large facility is required, there occurs an increase in impurity ions, and a large amount of a chemical reagent or $N_2$ gas is required.

The invention as claimed in the patent claims 1, 6, and 7 provides a process for DO removal in only a small amount of energy which can obtain water containing a very low concentration of DO i.e. high purity water, inexpensively and stably and a simple system therefor.

Other objects and advantages of the present invention will become apparent to those skilled in the art from the following description and drawings.

Fig. 1 is a schematic sectional view of an example **of** the system of the present invention;

Fig. 2 shows the relationship between the molar ratio of a reducing agent/DO in raw water and the DO in treated water;

Fig. 3 shows the relationship between the level of ultraviolet radiation applied and the amount of DO present in treated water;

Fig. 4 is a schematic, sectional view of the experimental apparatus of glove tests utilizing hydrogen as a reducing agent to determine relationships between the amount of DO present in treated water and a required treating time in accordance with the present invention; and

FIG. 5 is a graph showing relationships between the DO in treated water and treating time using the experimental apparatus showing in Fig. 4.

The present invention firstly provides a process for removing oxygen from water containing DO, which process comprises dissolving a reducing agent in water containing DO and irradiating the resulting water with ultraviolet rays. The process preferably comprises the following specific conditions.

(1) As the reducing agent, there is used hydrogen. The reducing agent is dissolved in water contain- ing DO, in such an amount that the molar ratio of the reducing agent added to DO in water becomes 1 - 5.

(2) The hydrogen gas employed as a reducing agent is dissolved in a water containing DO, via a gas-permeable membrane.

(3) The hydrogen employed as a reducing agent is obtained by electrolysis of water.

(4) Hydrogen gas is dissolved in water to be treated; the resulting water is irradiated with ultraviolet rays to remove the DO from the water; then, unreacted dissolved hydrogen present in the water is removed via a gas-permeable membrane (under vacuum condition).

(5) The amount of ultraviolet rays applied is at least 10 mW·sec/cm$^2$.

The present invention secondly provides an apparatus for removing oxygen from water containing DO, which comprises:

(a) a hydrogen generator of water electrolysis type,

(b) a unit for dissolving the hydrogen generated in the hydrogen generator (a), in water containing DO, to be treated, via a gas-permeable membrane,

(c) a unit for irradiating the water obtained in the unit (b), with ultraviolet rays,

(d) if necessary, a unit for removing unreacted residual hydrogen, if present, via a gas-permeable membrane, and

(e) connecting means such as pipes, pumps and the like, for connecting the units (a) to (c) or (a) to (d).

The dissolution of $H_2$ gas in the water can be effected, for example, by a $H_2$ gas-dissolving unit accommodating a $H_2$ gas-diffusing pipe or a $H_2$ gas-diffusing nozzle, or by a $H_2$ gas-dissolving means (e.g., $H_2$ gas-diffusing nozzle) provided at the bottom of an ultraviolet irradiation unit comprising an ultraviolet lamp and a protective quartz tube. Dissolution of $H_2$ gas through a gas-permeable membrane is effective for the production of ultrapure water, etc. because the fine particles present in the $H_2$ gas can be filtered by the membrane.

The ultraviolet lamp used can be any light source which generates ultraviolet rays having a wavelength of 400 nm or less. As the light source, there is generally used a mercury lamp. Besides the mercury lamp, there can be used, as the light source, a xenon mercury lamp, a xenon lamp, an excimer laser, an electron synchrotron, etc.

Next, description is made of the relationship between the amount of reducing agent added and the DO contained in the treated water.

For use as a raw water, pure water was obtained by treating tap water in a mixed bed type ion exchange resin tower. This raw water contained DO in an amount of about 7.3 mg/ℓ. $H_2$ gas was added to the raw water via a gas-permeable membrane, and the resulting water was introduced into an ultraviolet irradiation unit at a rate of 200 ℓ/hr. The amount of $H_2$ gas added was controlled so that the molar ratio of $H_2$ added/DO in the raw water became 1 - 5. The amount of ultraviolet rays applied was 160 mW·sec/cm$^2$.

The relationship between the molar ratio of $H_2$ gas added/DO in raw water and the DO in treated water is shown in Fig. 2. As is clear from Fig. 2, when the molar ratio of $H_2$ gas/DO in raw water is 3, the DO in treated water has reached substantially an equilibrium. Accordingly, in practical application, a level of 5 or less suffices for the molar ratio of $H_2$ gas/DO in raw water.

Based on the above results, the molar ratio of reducing agent/DO in raw water should be 1 - 5.

Next, description is made of the relationship between the level of ultraviolet radiation applied and the dissolved oxygen in treated water.

For use as a raw water, pure water was obtained by treating tap water in a mixed bed type ion exchange resin tower. The raw water contained DO in an amount of about 7.3 mg/ℓ. $H_2$ gas was added to the raw water via a gas-permeable membrane at a molar ratio (of $H_2$ gas added/ dissolved oxygen in raw water) of 3, and the resulting water was introduced into an ultraviolet irradiation unit at a rate of 50 ℓ/hr - 150 ℓ/hr.

The level of ultraviolet radiation applied was 640 - 21 mW·sec/cm$^2$ at 254 nm measured with the UV illumination intensity meter CM2503 manufactured by IWASAKI ELECTRIC CO., LTD. The relationship between the level of ultraviolet radiation applied and the DO in treated water is shown in Fig. 3. As is clear from Fig. 3, the level of ultraviolet radiation applied must be at least 10 mW·sec/cm$^2$. The upper limit of the amount of ultraviolet radiation applied is determined in view of the level of oxygen permitted to remain in the treated water and the economy of the oxygen removal system.

As far as our search is concerned, there could be found no paper discussing a phenomenon that when $H_2$ gas is dissolved in a water containing DO and the resulting water is irradiated with ultraviolet rays, the DO content in water is reduced.

Although the details of the reaction taking place in the process of the present invention have not yet been clarified and confirmed, it is presumed that the following reactions take place in the present process.

When a photon collides with a gas atom, the atom is ionized via an excited state. Between the ground state and the ionized state, there exist numerous excited states. The resonance and excitation potential is 11.2 V in the case of $H_2$ and 5 V in the case of $O_2$. The minimum excitation potential can be smaller than the above potential.

When irradiated with ultraviolet rays, $O_2$ of low excitation potential is placed in an excited state and it is presumed that the following reactions proceed.

$$O_2 \xrightarrow{h\nu} 2(O)*$$

$$(O)* + H_2 \rightarrow H_2O$$

[(O)* represents an oxygen atom in excited state.]

DO reacts with $H_2$ to become water ($H_2O$). This does not cause any increase in impurities. Accordingly, in particular when the present process is applied to the production of ultrapure water, there is obtained a big advantage in that no reduction in water quality occurs.

Needless to say, ultraviolet rays have a sterilizing effect; therefore, the present invention can be utilized not only or the removal of DO but also for the sterilization of water.

It is known that when a water containing DO is mixed with a reducing agent, the DO concentration in water is reduced by the reaction of DO with the reducing agent, but the reaction efficiency is fairly low when the reaction is conducted at ambient temperature.

Ultraviolet rays have an energy of about 300 kJ/mol when the wavelength is 400 nm, about 400 kJ/mol when the wavelength is 300 nm, and about 600 kJ/mol when the wavelength is 200 nm. It is presumed that the $O_2$ in water is also partially excited by the irradiation.

Therefore, by adding a reducing agent and then applying ultraviolet rays, the reaction between DO and the reducing agent is significantly accelerated and DO can be effectively removed.

In order to achieve the above object, the present invention provides a system for removing DO from water, which system comprises:

a hydrogen generator for generating hydrogen by electrolysis of water;

a unit for dissolving the hydrogen supplied from the hydrogen generator, in an oxygen-containing water to be treated, via a gas-permeable membrane; and

a unit for irradiating the hydrogen-dissolved water to be treated, with ultraviolet rays.

The present invention further provides a system for removing DO from water, which is an addition, to the above system, of a unit for removing the unreacted dissolved hydrogen via a gas-permeable membrane.

That is, the present invention provides an improved system for removing DO from water safely and easily, by using the hydrogen generated by electrolysis of water. The improved system of the present invention is characterized by comprising:

(1) a hydrogen generator for generating hydrogen by electrolysis of water;

(2) a hydrogen-dissolving unit for dissolving the hydrogen obtained above, in a DO-containing water to be treated, via a gas-permeable membrane;

(3) a unit for irradiating the resulting water with ultraviolet rays;

(4) a unit for removing excessive hydrogen via a gas-permeable membrane if the unreacted dissolved hydrogen exists; and

(5) pipes connecting the units (1) to (3) or (1) to (4), pumps, etc.

The hydrogen generator can be any unit which generates a required amount of hydrogen by electrolysis of water. There can be used, for example, an electrolysis unit using an aqueous alkali solution, an electrolysis unit using an aqueous solid polymer electrolyte solution and an electrolysis unit using an aqueous solid oxide electrolyte solution. The hydrogen generator is preferably an electrolysis unit using an aqueous solid polymer electrolyte solution, which uses no corrosive solution (e.g., alkali solution) and whose maintenance may be easily carried out.

The gas-permeable membrane is a membrane which transmits gases such as hydrogen, oxygen, nitrogen, steam and the like but does not transmit water. There can be used a hydrophobic membrane made of a silicone rubber, a poly(ethylene tetrafluoride), a polyolefin, a polyurethane or the like. The membrane has pores of 20 μm or less in diameter, and a membrane having pores of 0.01 - 1 μm in diameter is widely used.

The hydrogen-dissolving unit is a unit wherein water is passed to one side of the above-mentioned gas-permeable membrane and the other side is pressurized by hydrogen to dissolve hydrogen in the water. This unit can perform dissolution of hydrogen efficiently, as compared with a gas-diffusing nozzle, etc.

The excess hydrogen-removing unit comprises a unit wherein water is passed at one side of the above-mentioned gas-permeable membrane and the other side is made vacuum by a vacuum pump to remove excess hydrogen from the water.

The present system for DO removal works in the following way.

In the hydrogen-dissolving unit, since hydrogen is dissolved in water via a gas-permeable membrane, no bubbles are formed, the amount of introduced hydrogen is equal to the amount of hydrogen dissolved in the water, and the efficiency of hydrogen dissolution in water is substantially 100%. That is, there is no discharge of excessive hydrogen from the hydrogen-dissolving unit and consequently no gas separation tower is required. Further, the amount of hydrogen dissolved can be controlled by, for example. the material and area of the membrane used.

In the hydrogen generator by electrolysis of water. hydrogen can be easily generated by electricity control, in an amount required for dissolution in the hydrogen-dissolving unit. Therefore, hydrogen can be supplied in an amount required for the DO-containing water.

Thus, by combining the hydrogen generator based on the electrolysis of water and the hydrogen-dissolving unit using a gas-permeable membrane, the amount of hydrogen added can be controlled stably, safely and easily.

In the excessive hydrogen-removing unit, the dissolved hydrogen remaining after the ultraviolet irradiation unit can be removed. That is, since hydrogen gas has a very small molecular weight as compared with other gases, it can easily move from a liquid phase to a vacuum side via a gas-permeable membrane and can thereby be removed. Ordinarily, hydrogen has a gas permeation speed of 5 - 20 times faster than that of oxygen.

## Examples

The present invention is described specifically below with reference to Examples and Comparative Examples. However, the present invention is in no way restricted to the following Examples.

## Example 1

Tap water was converted to a pure water by being treated in a so-called mixed bed type desalting tower packed with a mixture of a strongly acidic cation exchange resin (Dowex HCR-W2 manufactured by Dow Chemical) and a strongly basic anion exchange resin (Dowex SBR-P manufactured by Dow Chemical). The pure water was used as raw water 1. One liter of the pure water was collected in a container 3 of an apparatus shown in Fig. 4. In Fig. 4, the container 3 has an effective volume of about 1 $\ell$. There was lit a low-pressure mercury lamp 8 of 100 W (power consumption) provided at the center of the container 3 via a protective tube 9 made of artificial quartz. $H_2$ gas was blown into the vessel at a rate of 100 N-m$\ell$/min through an $H_2$ gas-diffusing nozzle 10 provided below the protective tube. In Fig. 4, 11 refers to a gas-liquid separator; 12 refers to a pump; and 13 refers to a DO meter.

In Fig.5 are shown relationships between an amount of DO present and a treating time. The result of Example 1 is represented by a curve A, wherein DO was reduced to 50 $\mu$g/$\ell$ or less in a treating time of about 9 minutes.

## Comparative Example 1

One liter of the same pure water was collected in the same manner as in Example 1. The low-pressure mercury lamp was lit without blowing $H_2$ gas. The result is shown by a curve 3 in Fig. 6, and the reduction in DO was very slight even after a treating time of 30 minutes.

## Comparative Example 2

One liter of the same pure water was collected in the same manner as in Example 1. $H_2$ gas was blown at a rate of 100 N-m$\ell$/min without lighting the low-pressure mercury lamp. The result is given by a curve C in Fig. 6, and DO was reduced to about 100 $\mu$g/$\ell$ after a treating time of 30 minutes.

## Example 2

In Fig. 1, a hydrogen generator 19 is unit by electrolysis of water using an aqueous solid polymer electrolyte. It can electrically control the amount of hydrogen generated and can easily generate a required amount of hydrogen.

Then, the hydrogen 2 generated in the hydrogen generator 19 is fed to a hydrogen-dissolving container 3

to dissolve the hydrogen in raw water 1 containing DO, via a membrane 20. For example. when there is treated a raw water containing DO in an amount of about 1 mg/ℓ and having a flow rate of 150 ℓ/hr, a required amount of hydrogen is fed by generating hydrogen in an amount of 8 mℓ/min and using, as a gas-permeable membrane 20, a hollow polyurethane membrane having a membrane area of 0.4 $m^2$. In this case, hydrogen is dissolved in a slight excess relatively equivalent to the amount of oxygen.

Next, the hydrogen-dissolved staring water 5 is introduced into an ultraviolet irradiation unit 4 to react hydrogen with DO to remove DO.

Thereafter, the DO-removed water is introduced into an excessive hydrogen-removing unit 21, where the dissolved hydrogen remaining in the water owing to the addition in slight excess equivalent is removed by a vacuum pump 22 via a gas-permeable membrane 20 to obtain treated water free from DO.

The waste gas 25 containing hydrogen, discharged from the vacuum pump 22 is very small in volume, but is mixed with a gas 24 composed mainly of the oxygen produced by the hydrogen generator, on an oxidation catalyst 23 and treated.

## Claims

1. A process for removing dissolved oxygen from water, comprising adding hydrogen in an amount of 1 - 5 mole per mole of dissolved oxygen, and then irradiating with a total dose of ultraviolet radiation of more than about 10 mW.sec/$cm^2$ the resulting solution consisting essentially of water, dissolved oxygen, and the added hydrogen.

2. A process according to Claim 1 wherein hydrogen is dissolved in an oxygen-containing water to be treated via a gas-permeable membrane.

3. A process according to Claim 1 wherein hydrogen is generated from a hydrogen generator by electrolysis of water.

4. A process according to Claim 2 wherein hydrogen is generated from a hydrogen generator by electrolysis of water.

5. A process according to any one of Claims 1 - 4 wherein after adding hydrogen to water containing dissolved oxygen and irradiating the resulting water with ultraviolet rays to remove dissolved oxygen from the water, the unreacted dissolved hydrogen is removed from the water via a gas-permeable membrane.

6. A system for removing dissolved oxygen from water, which system comprises:
   a hydrogen generator for generating hydrogen by electrolysis of water;
   a unit for dissolving the hydrogen supplied from the hydrogen generator, in an oxygen-containing water to be treated, via a gas-permeable membrane; and
   a unit for irradiating the water containing hydrogen, with ultraviolet rays.

7. A system for removing dissolved oxygen from water, which system comprises:
   a hydrogen generator for generating hydrogen by electrolysis of water;
   a unit for dissolving the hydrogen supplied from the hydrogen generator, in an oxygen-containing water to be treated, via a gas-permeable membrane;
   a unit for irradiating the water containing hydrogen, with ultraviolet rays; and
   a unit for removing unreacted dissolved hydrogen via a gas-permeable membrane.

## Patentansprüche

1. Verfahren zum Entfernen von gelöstem Sauerstoff aus Wasser, bei dem Wasserstoff in einer Menge von 1 - 5 mol pro mol gelösten Sauerstoffes zugegeben wird und dann die erhaltene Lösung, die im wesentlichen aus Wasser, gelöstem Sauerstoff und dem zugegebenen Wasserstoff besteht, mit ultravioletter Strahlung in einer Gesamtdosis von mehr als etwa 10 mW.s/$cm^2$ bestrahlt wird.

2. Verfahren nach Anspruch 1, bei dem Wasserstoff über eine gasdurchlässige Membran in einem zu behandelnden, Sauerstoff enthaltenden Wasser gelöst wird.

3. Verfahren nach Anspruch 1, bei dem Wasserstoff aus einem Wasserstoffgenerator durch Elektrolyse von Wasser erzeugt wird.

4. Verfahren nach Anspruch 2, bei dem Wasserstoff aus einem Wasserstoffgenerator durch Elektrolyse von Wasser erzeugt wird.

5. Verfahren nach einem der Ansprüche 1 - 4, bei dem nach der Zugabe von Wasserstoff zu Wasser, welches gelösten Sauerstoff enthält, und dem Bestrahlen des erhaltenen Wassers mit ultravioletten Strahlen zum Entfernen von gelöstem Sauerstoff aus dem Wasser, der nicht reagierte gelöste Wasserstoff über eine gasdurchlässige Membran aus dem Wasser entfernt wird.

6. Anlage zum Entfernen von gelöstem Sauerstoff aus Wasser, mit:
einem Wasserstoffgenerator zum Erzeugen von Wasserstoff durch Elektrolyse von Wasser;
einer Einrichtung zum Lösen des vom Wasserstoffgenerator zugeführten Wasserstoffes in einem zu behandelnden, Sauerstoff enthaltenden Wasser über eine gasdurchlässige Membran; und
einer Einrichtung zum Bestrahlen des Wasserstoff enthaltenden Wassers mit ultravioletten Strahlen.

7. Anlage zum Entfernen von gelöstem Sauerstoff aus Wasser, mit:
einem Wasserstoffgenerator zum Erzeugen von Wasserstoff durch Elektrolyse von Wasser;
einer Einrichtung zum Lösen des vom Wasserstoffgenerator zugeführten Wasserstoffes in einem zu behandelnden, Sauerstoff enthaltenden Wasser über eine gasdurchlässige Membran;
einer Einrichtung zum Bestrahlen des Wasserstoff enthaltenden Wassers mit ultravioletten Strahlen; und
einer Einrichtung zum Entfernen von nicht reagiertem gelösten Wasserstoff über eine gasdurchlässige Membran.

## Revendications

1. Procédé d'extraction d'oxygène dissous de l'eau, comprenant l'addition d'hydrogène en quantité comprise entre une et cinq moles par mole d'oxygène dissous, puis l'irradiation avec une dose totale d'un rayonnement ultraviolet supérieure à environ 10 $mW.s/cm^2$, la solution résultante étant essentiellement formée d'eau, d'oxygène dissous et d'hydrogène ajouté.

2. Procédé selon la revendication 1, dans lequel l'hydrogène est dissous dans de l'eau contenant de l'oxygène à traiter à travers une membrane perméable aux gaz.

3. Procédé selon la revendication 1, dans lequel l'hydrogène est créé à partir d'un générateur d'hydrogène par électrolyse de l'eau.

4. Procédé selon la revendication 2, dans lequel l'hydrogène est créé à partir d'un générateur d'hydrogène par électrolyse de l'eau.

5. Procédé selon l'une quelconque des revendications 1 à 4, dans lequel, après addition d'hydrogène à l'eau contenant l'oxygène dissous et irradiation de l'eau résul- tante par les rayons ultraviolets afin que l'oxygène dissous soit retiré de l'eau, l'hydrogène dissous qui n'a pas réagi est retiré de l'eau à travers une membrane perméable aux gaz.

6. Installation d'extraction d'oxygène dissous de l'eau, l'installation comprenant :
un générateur d'hydrogène destiné à dégager l'hydro- gène par électrolyse de l'eau,
un ensemble de dissolution d'hydrogène transmis par le générateur d'hydrogène, dans de l'eau contenant de l'oxygène qui doit être traitée, à travers une membrane perméable aux gaz, et
un ensemble d'irradiation de l'eau contenant l'hydrogène avec des rayons ultraviolets.

7. Installation d'extraction d'oxygène dissous de l'eau, l'installation comprenant :
un générateur d'hydrogène destiné à dégager de l'hydrogène par électrolyse de l'eau,
un ensemble de dissolution de l'hydrogène, transmis par le générateur d'hydrogène, dans de l'eau contenant de l'oxygène et qui doit être traitée, à travers une membrane perméable aux gaz,

un ensemble d'irradiation de l'eau contenant l'hydrogène avec des rayons ultraviolets, et

un ensemble d'extraction de l'hydrogène dissous qui n'a pas réagi à travers une membrane perméable aux gaz.

Fig. 1

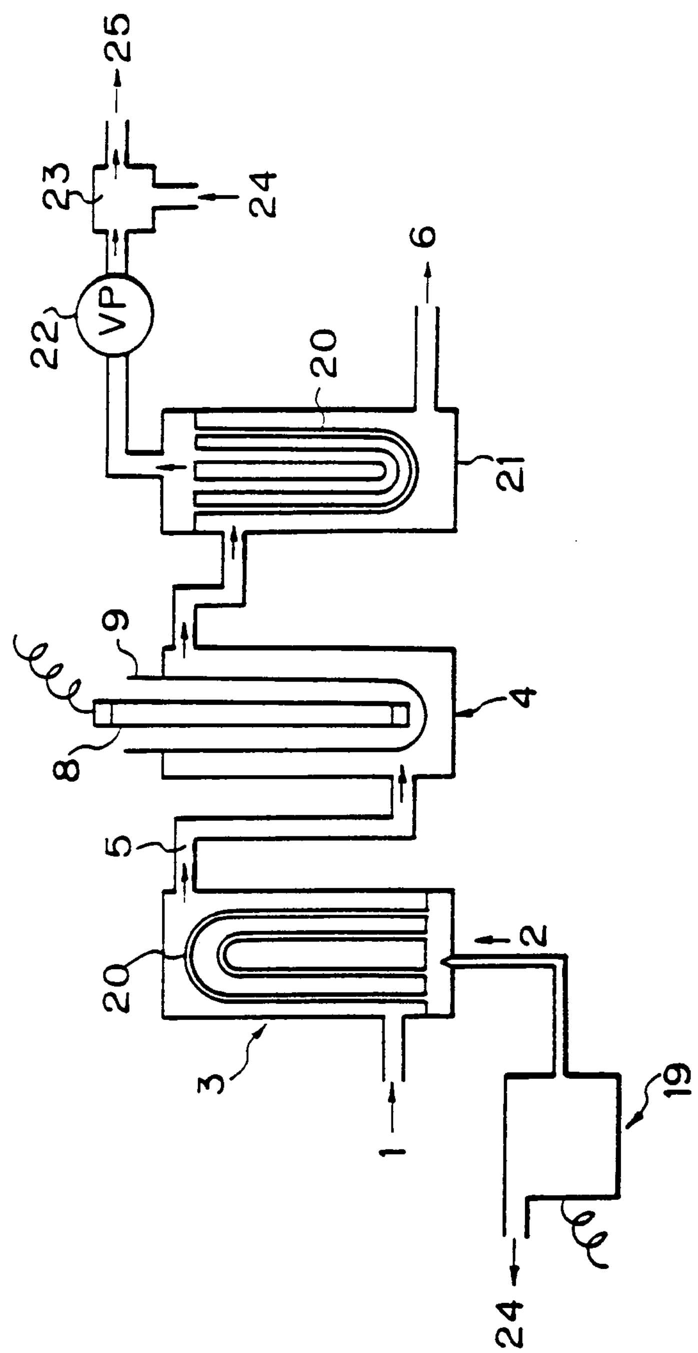

Fig. 2

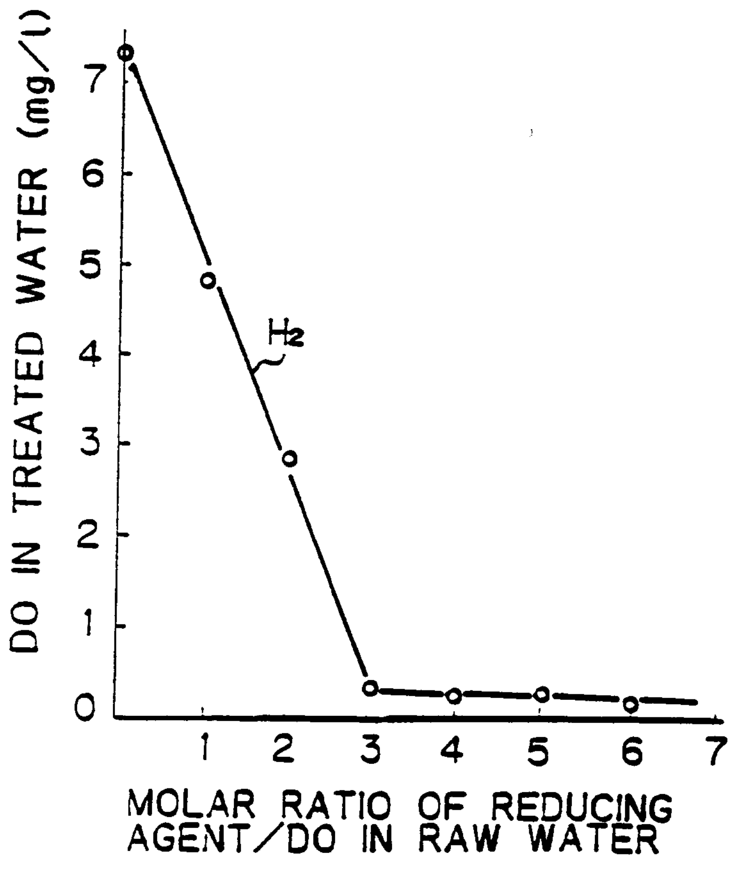
DO IN TREATED WATER (mg/l)
7
6
5
4
3
2
1
0
H2
1
2
3
4
5
6
7
MOLAR RATIO OF REDUCING AGENT/DO IN RAW WATER

Fig. 3

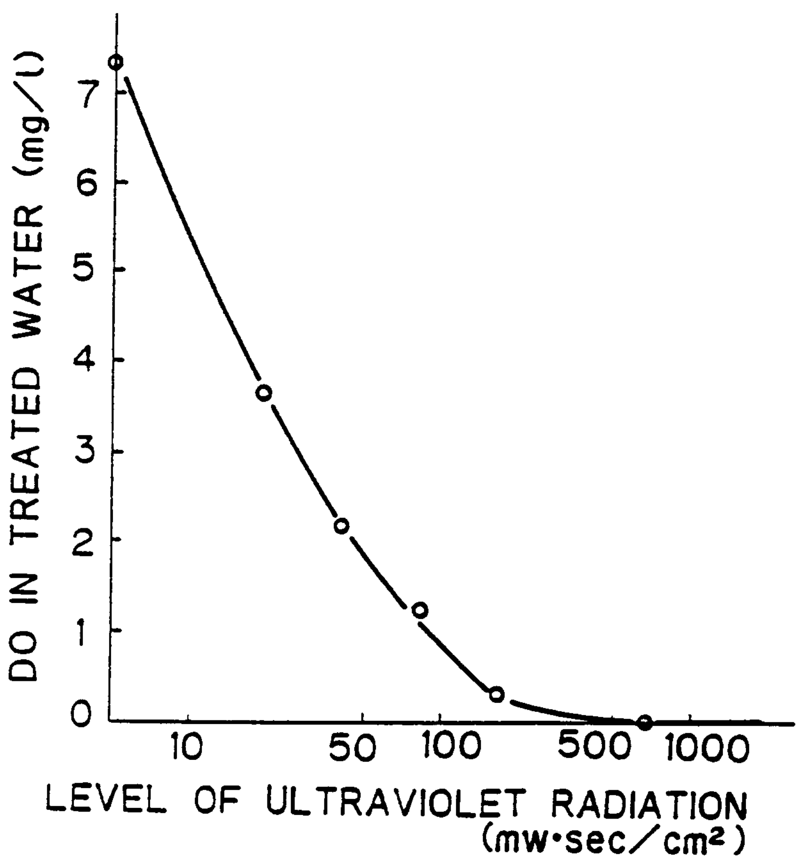
DO IN TREATED WATER (mg/l)
0
1
2
3
4
5
6
7
10
50
100
500
1000
LEVEL OF ULTRAVIOLET RADIATION
(mw·sec/cm²)

Fig. 4

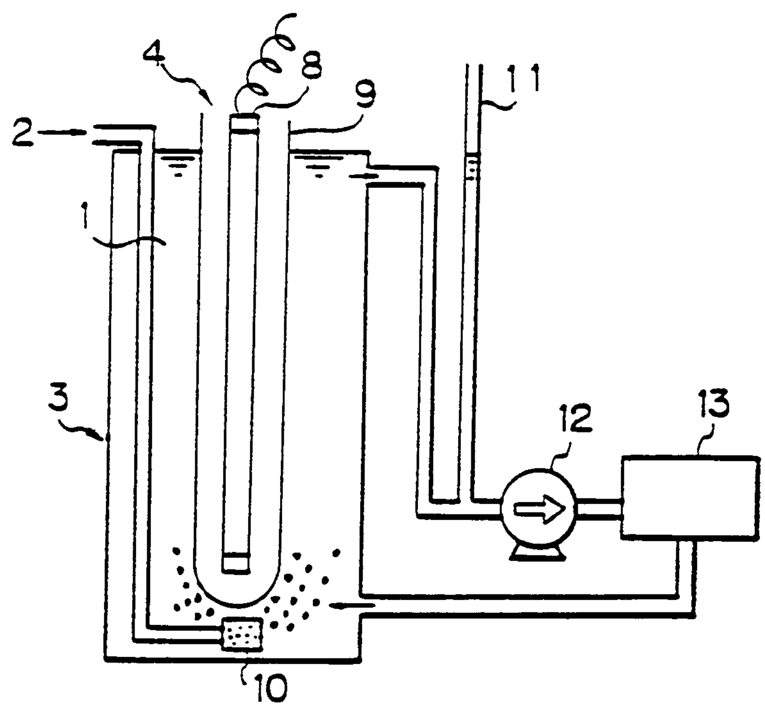

Fig. 5

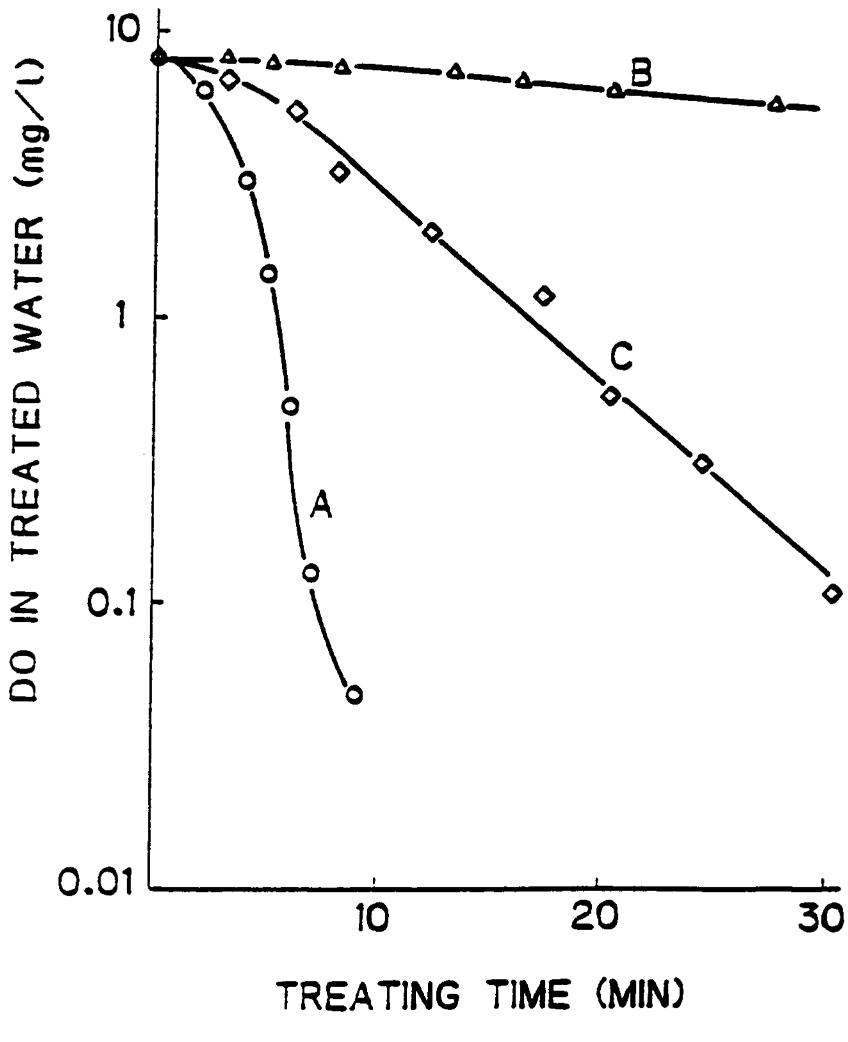
10
1
0.1
0.01
DO IN TREATED WATER (mg/l)
B
C
A
10
20
30
TREATING TIME (MIN)